(19) Europäisches Patentamt
European Patent Office
Office européen des brevets

(11) EP 2 741 558 A2

(12) EUROPEAN PATENT APPLICATION

(43) Date of publication:
11.06.2014 Bulletin 2014/24

(51) Int Cl.:
H04W 72/04 (2009.01)

(21) Application number: 13181242.2

(22) Date of filing: 21.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 07.12.2012 JP 2012268275

(71) Applicant: Kabushiki Kaisha Toshiba
Tokyo (JP)

(72) Inventors:
• Tohzaka, Yuji
Minato-ku, Tokyo (JP)
• Aoki, Tsuguhide
Minato-ku, Tokyo 105-8001 (JP)

(74) Representative: Granleese, Rhian Jane et al
Marks & Clerk LLP
90 Long Acre
London WC2E 9RA (GB)

(54) **Wireless communication device and wireless communication method**

(57)    A wireless communication device includes a wireless communication module and an allocator. The wireless communication module wirelessly communicates with a plurality of other wireless communication devices. The allocator allocates time resources and frequency resources to a plurality of traffics which periodically occur between the wireless communication device and the plurality of other wireless communication device in descending order of resource utilizations. The resource utilization of a given traffic corresponds to a time rate at which the given traffic uses a frequency resource allocated thereto. The allocator allocates the frequency resource, which is arranged at a position closer to an end than a center frequency, to a traffic which is the highest in resource utilization.

FIG. 2

## Description

FIELD

Embodiment described herein relate generally to wireless communication.

BACKGROUND

In a technical field of the wireless communication, a variety of resource allocating techniques have been proposed for the purpose of cfficiently using limited resources (specifically, time resources and fequency resources). For example, there has been known a technique in which a frequency resource in an end of a frequency band (that is, a frequency resource close to a lower limit frequency or an upper limit frequency) is allocated to traffic in which data transmission such as VoIP (Voice over Internet Protocol) periodically occurs. A frequency hopping is performed in addition to the above frequency resource allocation, which results in that the traffic can obtain a good frequency diversity effect, Further, according to the above frequency resource allocation, a large number of frequency resources which are continuous a center frequency can be kept free. Hence, for example, when another traffic (for example, web browsing) that performs a single carrier transmission exists together, an upper limit of the number of frequency resources that can be allocated to said another traffic can be stably increased. As a result a high throughput can be achieved over an overall wireless communication system.

However, even in view of the above technique, for example, when a plurality of traffics which are different in a period in which the data transmission occurs from each other exist together, it is unknown how the frequency resource on the end is allocated to the plurality of traffics.

Also, according to a wireless LAN (Local Area Network), an access point (AP) determines a frequency resource (which is also referred to as a "frequency channel" or simply a "channel") to be used in an autonomous decentralized fashion. Specifically the AP determines a channel to be used so as not to overlap with a channel that has already been used by another AP in the same area. In recent wireless LAN standards (for example, IEEE802.11n, IEEE802.11ac, etc.), a technique called "channel bonding" has been employed, and an AP can enlarge a bandwidth of the channel to be used as occasion demands. However, unless the channel to be used by another AP is systematically determined, the APs that will operate in the same area in future cannot use the channel bonding, and the degree of freedom of channel selection may be restricted.

SUMMARY

Embodiments aim at efficiently using frequency resources.

According to one embodiment, a wireless communication device includes a wireless communication module and an allocator. The wireless communication module wirelessly communicates with a plurality of other wireless communication devices. The allocator allocates time resources and frequency resources to a plurality of traffics which periodically occur between the wireless communication device and the plurality of other wireless communication devices in descending order of resource utilizations. The resource utilization of a given traffic corresponds to a time rate at which the given traffic uses a frequency resource allocated thereto. The allocator allocates the frequency resource, which is arranged at a position closer to an end than a center frequency, to a traffic which is the highest in resource utilization.

BRIEF DESCRIPTION OF THE DRAWINGS

Fig. 1 is a diagram showing a wireless communication system made up by a plurality of wireless communication devices including a wireless communication device according to a first embodiment;
Fig. 2 is a block diagram showing the wireless communication device according to the first embodiment;
Fig. 3 is a flowchart showing a resource allocation process according to the first embodiment;
Fig. 4 is a diagram showing resource allocation obtained by a resource allocation process of a first comparative example;
Fig. 5 is a diagram showing resource allocation obtained by the resource allocation process according to the first embodiment;
Fig. 6 is a diagram showing resource allocation for a retransmission process in an uplink of 3 GPP LTE of an FDD system;
Fig. 7 is a diagram showing resource allocation obtained by a resource allocation process according to a second embodiment;

Fig. 8 is a diagram showing resource allocation obtained by a resource allocation process of a second comparative example;

Fig. 9 is a diagram showing a wireless communication system made up by a plurality of wireless communication devices including a wireless communication device according to a third embodiment;

Fig. 10 is a block diagram showing the wireless communication device according to the third embodiment;

Fig. 11 is a diagram showing a frequency channel arrangement of IEEE802.11ac in the United State;.

Fig. 12 is a diagram showing a frequency channel arrangement of IEEE802.11ac in Japan and Europe.

Fig. 13 is a flowchart showing a channel selection process according to the third embodiment;

Fig. 14 is an illustrative view showing an example in which the channel selection process according to the third embodiment is applied;

Fig. 15 is an illustrative view showing another example in which the channel selection process according to the third embodiment is applied;

Fig. 16 is a diagram showing resource allocation obtained by a resource allocation process of another comparative example; arid

Fig. 17 is a diagram showing resource allocation obtained by the resource allocation process according to the second embodiment.

DETAILED DESCRIPTION

Hereinafter, embodiments will be described with reference to the accompanying drawings. Elements that are identical with or similar to ones that have been described will be denoted by identical or similar symbols, and redundant description thereon will be basically omitted.

According to one embodiment, a wireless communication device includes a wireless communication module and an allocator. The wireless communication module wirelessly communicates with a plurality of other wireless communication devices. The allocator allocates time resources and frequency resources to a plurality of traffics which periodically occur between the wireless communication device and the plurality of other wireless communication devices in descending order of resource utilizations. The resource utilization of a given traffic corresponds to a time rate at which the given traffic uses a frequency resource allocated thereto. The allocator allocates the frequency resource, which is arranged at a position closer to an end than a center frequency, to a traffic which is the highest in resource utilization.

(First Embodiment)

In a first embodiment and a second embodiment which will be described later, a wireless communication system may be, for example, the 3GPP LTE (Third Generation Partnership Project Long Term Evolution) or the WiMAX (Worldwide Interoperability for Microwave Access). However, it should be noted that the wireless communication system is not limited thereto.

The 3GPP LTE defines a semi-persistent resource allocation where a result of allocation of frequency resource positions and time periods is notified only once at the beginning as well as a normal resource allocation where a result of allocation of the frequency resource positions is notified every time. According to the semi-persistent resource allocation, it is possible to remarkably reduce overhead related to the notification of the resource allocation result.

Thus normal resource allocation is applied to a traffic (for example, web browsing) in which occurrence of data transmission is unpredictable that is, a traffic not suitable for periodic allocation of the frequency resource(s). On the other hand, the semi-persistent resource allocation is applied to a traffic (for example, VoIP) In which data transmission periodically occurs. In future, with the growth of communication between machines, it is predicted that a plurality of traffics which are different from each other in period with which data transmission occurs exists together.

In the following description, the traffic(s) to which the semi-persistent resource allocation is applied will be referred to as a "periodic traffic(s)", and the traffic(s) to which the normal resource allocation is applied will be referred to as a "non-periodic traffic(s)."

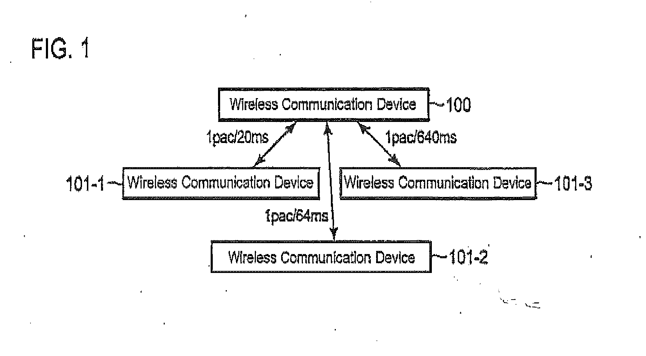

A wireless communication device according to this embodiment makes up a wireless communication system shown in Fig. 1. A wireless communication device 100 in Fig. 1 corresponds to the wireless communication device according to this embodiment. The wireless communication device according to this embodiment may be called by another name such as a "base station." A wireless eommunication device 101-1, a wireless communication device 101-2, and a wireless communication device 101-3 are interconnected in the form of the tree network topology having the wireless communication device 100 as a root. The wireless communication device 101-1, the wireless communication device 101-2, and the wireless communication device 101-3 may also be referred to as "UE (user equipment)".

The wireless communication device 101-1 communicates with the wireless communication device 100 with a period of 20ms (every 20ms), Likewise, the wireless communication device 101-2 and the wireless communication device 101-3 communicate with the wireless communication device 100 with a period of 64ms and a period of 640 ms, respectively. In the following description, a "period" of a periodic traffic is not requited to be a complete constant value, but for example, a deviation attributable to various factors such as a processing delay is permitted. Therefore, the "period" of the periodic traffic substantially represents a mean period obtained by observation for an extended period of time.

The wireless communication device 100 appropriately allocates resources to the periodic traffic of the wireless communication device 101-1, the periodic traffic of the wireless communication device 101-2, and the periodic traffic of the wireless communcation device 101-3, to achieve high throughput of the overall wireless communication system shown in Fig. 1. In this embodiment, a part or all of those periodic traffics may be based on the communication between machines, based on the VoIP, or based on communication for another intended purpose.

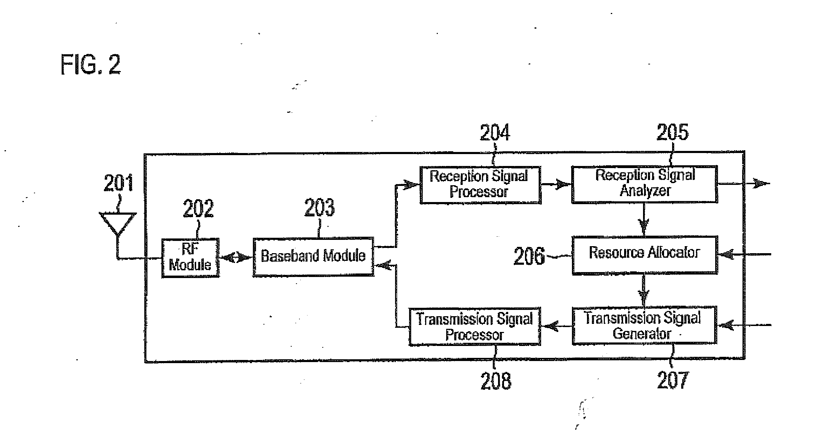

As shown in Fig. 2, the wireless communication device according to this embodiment includes an antenna 201, an RF (radio frequency) module 202, a baseband module 203, a reception signal processor 204, a reception signal analyzer 205, a resource allocator 206, a transmission signal generator 207, and a transmission signal processor 208.

During a receiving operation, the antenna 201 receives an RF signal from space, and outputs the receive RF signal to the RF module 202. During a transmitting operation, the antenna 201 receives a transmission RF signal from the baseband module 203, and emits the transmission RF signal toward the space.

The RF module 202 includes general analog signal processor circuits for wireless communication such as a low noise amplifier (LNA), a mixer (MIX), a voltage controlled oscillator (VCO), and a power amplifier (PA).

During the receiving operation, The RF module 202 receives the received RF signal from the antenna 201, and performs for the receive RF signal, for example, low noise amplification and down conversion so as to obtain a received baseband signal. The RF module 202 outputs the received baseband signal to the baseband module 203.

During the transmitting operation, the RF module 202 receives a transmission baseband signal from the baseband module 203, and performs for the transmission baseband signal, for example, up conversion and power amplification so as to obtain the transmission RF signal. The RF module 202 outputs the transmission RF signal to the antenna 201,

During the receiving operation, the baseband module 203 receives the received baseband signal from the RF module 202, and performs for the received baseband signal, for example, frequency estimation, symbol timing estimation, phase estimation, and symbol decision, so as to obtain a decided value. The baseband module 203 outputs the determined symbol to the reception signal processor 204.

During the transmitting operation, the baseband module 203 performs, for example, symbol mapping and pulse shaping so as to obtain the transmission baseband signal. The baseband module 203 outputs the transmission baseband signal to the RF module 202.

The reception signal processor 204 receives the decided values from the baseband module 203, performs for the decided values, for example, discrete Fourier transform (DFT), subcarrier demapping, channel equalization, inverse discrete Fourier transform (IDFT), demodulation, descrambling, and decoding so as to obtain a reception signal. The reception signal processor 204 outputs the reception signal to the reception signal analyzer 205.

The reception signal analyzer 205 receives the reception signal from the reception signal processor 204. The reception signal analyzer 205 analyzes a control signal, which is obtained by performing signal separation for the reception signal, so as to interpret control information indicated by the control signal. If the control information pertains to the resource allocation, the reception signal analyzer 205 notifies the control information to the resource allocator 206. The control information relating to the resource allocation is, for example, information relating to a scheduling request. Furthermore, the reception signal analyzer 205 outputs a user data signal, which is obtained by performing the signal separation for the reception signal, to a signal processor (not shown) in a higher layer. The reception signal analyzer 205 may derive, based on the reception signal, information relating to a rate of errors occurring in each periodic traffic, and notify the Information relating to the rate of errors to the resource allocator 206.

The resource allocator 206 is notifies of the control information relating to the resource allocation from the reception signal analyzer 205 or the signal processor (not shown) in the higher layer. The resource allocator 206 executes a resource allocation process based on the control information and information of each periodic traffic for which the allocation is to be performed. In the example of Fig. 1, the resource allocator 206 of the wireless communication device 100 determines resources to be allocated to the periodic traffics of the wireless communication device, 101-1, the periodic traffics of the wireless communication device 101-2, and the periodic traffic of the wireless communication device 101-3, respectively. Details of the resource allocation process according to this embodiment will be described later, The resource allocator 206 notifies control information indicative of a resource allocation result to the transmission signal generator 207.

The transmission signal generator 207 is notifies of the control information indicative of the resource allocation result from the resource allocator 206. The transmission signal generator 207 generates a control signal based on the notified control information, and generates a frame for carrying the control signal in conformity with a predetermined format to generate the transmission signal. Furthermore, the transmission signal generator 207 receives a user data signal from the signal processor (not shown) in the higher layer, and stores the received user data signal. Then, the transmission signal generator 207 generates a frame for carrying the stored user data signal in conformity with the predetermined format in the resource allocated for transmitting the stored user data signal to a reception destination, to thereby generate the transmission signal. The transmission signal generator 207 outputs the transmission signal to the transmission signal processor 208.

The transmission signal processor 208 receives the transmission signal from the transmission signal generator 207. The transmission signal processor 208 performs for the transmit signal, for example, encoding, scrambling, modulation, layer mapping, precoding, subcarrier mapping, and inverse fast Fourier transform (NIFFY) operation.

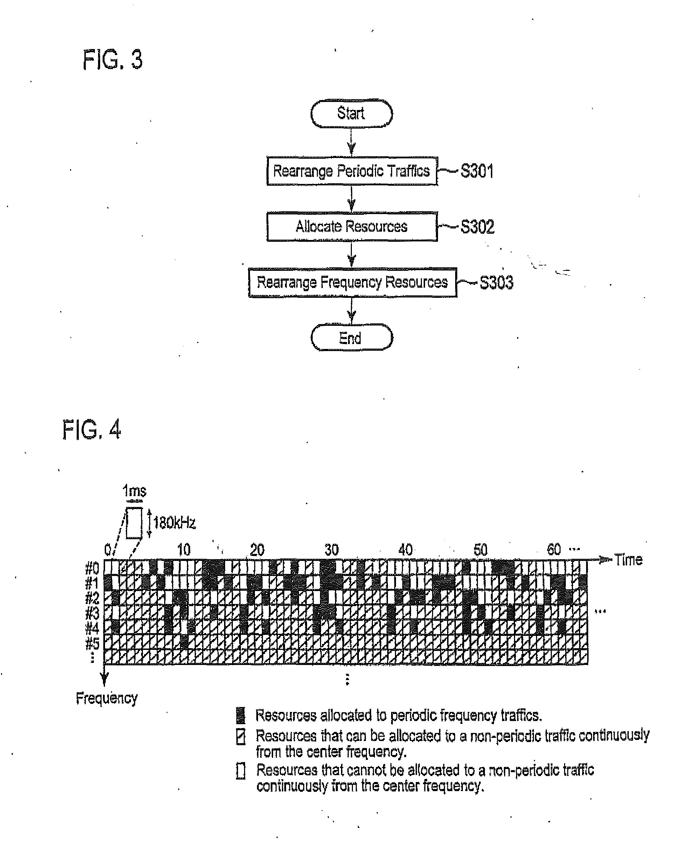

The resource allocator 206 executes the resource allocation process exemplified in Fig. 3 in order to newly or again allocate the resources to each respective periodic traffic, for example, in response to the scheduling request.

The resource allocation process of Fig. 3 determines resources periodically allocated to one or more periodic traffics. In the resource allocation process of Fig. 3, the resources are allocated to the periodic traffics so that a total utilization of an extreme frequency resource is higher than that of a central frequency resource. As will be described later, the total utilization of a given frequency resource represents a total of time rates (that is, resource utilization to be described later) at which any of periodic traffics to which the given frequency resource is periodically allocated uses the given frequency resource.

Specifically, the resource allocator 206 rearranges one or more periodic traffics for which the allocation is to be performed in descending order of the resource utilization of the periodic traffics (Step S301). In this example, the resource utilization of a given periodic traffic represents a time rate at which the given periodic traffic uses a certain frequency resource when the certain frequency resource is periodically allocated to the given periodic traffic. Therefore, if time resources are represented in units of 1ms, for example, as in the 3GPP LTE, the resource utilization of the periodic traffic can be easily calculated through the following Expression (1).

$$M_k = T_k^{-1} \qquad (1)$$

In Expression (1), k denotes an index for identifying a periodic traffic in interest, $M_k$ denotes a resource utilization of the periodic traffic k, and $T_k$ denotes a period [ms] of the periodic traffic k. 1 ms term over $T_k$ ms duration is used by the traffic k.

In Expression (1), an increment in the number of transmissions due to a retransmission process is not taken into acaount. Since the retransmission process is conducted whcn a packet error occurs on a receiver side, an expected value of a total number of transmissions of an arbitrary packet can be obtained using a packet error rate and a maximum number of retransmissions. Therefore, the resource utilization of the periodic traffic may be calculated through the following Expression (2) instead of the above Expression (1).

$$M_k = T_k^{-1} \times \left(1 + p_k + p_k^{2} + \ldots + p_k^{qk}\right)$$
$$= T_k^{-1} \times \frac{1 - p_k^{qk+1}}{1 - p_k} \qquad (2)$$

In Expression (2), $p_k$ denotes a packet error rate of the periodic traffic k, and $q_k$ denotes the maximum number of retransrrrissians of the periodic traffic k. In order to calculate the resource utilization of the periodic traffic by Expression (2), there is a need to derive the packet error rate or information equivalent thereto. The packet error rate may be calculated by, for example, the reception signal analyzer 205. The information equivalent to the packet error rate is information available for estimation of a retransmission frequency such as an SINR (Signal to Interference plus Noise Ratio) indicative of the quality of a radio propagation channel. In this example, the SINR can be calculated by a reference signal which is obtained by performing the signal separation for the reception signal, and may be calculated by, for example, the reception signal analyzer 205.

Also, the resource utilization of the periodic traffic may be calculated through a technique other than the above Expressions (1) and (2),

Then, the resource allocator 206 allocates the time resources and the frequency resources to the one or more periodic traffics, which are rearranged in Step S301, in order (Step S302).

The resource allocator 206 may allocate the resources to a first periodic traffic as described below. As to the frequency resources, the resource allocator 206 preferably allocates an extreme frequency resource to the first periodic traffic. Since the first periodic traffic has the highest resource utilization, the extreme frequency resource is allocated to the first periodic traffic, which results in that the total utilization of the extreme frequency resource can be efficiently increased. AJso, a delay time given to a periodic traffic in interest becomes shorter as a time resource allocated to the periodic traffic in interest is earlier. Hence, the resource allocator 206 preferably allocates the earliest time resource to the first periodic traffic.

The resource allocator 206 allocates the resources to second and subsequent periodic traffics so as not to conflict with any of the resources that have already been allocated. Preferably, the resource allocator 206 preferentially allocates the end-side frequency resources and the earlier time resources to the second and subsequent periodic traffics.

For example, if there is no periodic traffic to which a certain frequency resource is periodically allocated, an arbitrary time resource of the certain frequency resource can be allocated. Also, even if there are one or more periodic traffics to which a certain frequency resource is periodically allocated, a partial time resource of the certain frequency resource may be allocatable.

For example, the resource allocator 206 may allocate the resource to a periodic traffic in interest as described below, or may allocate the resource in conformity with an algorithm different from that described below.

The resource allocator 206 tentatively allocates the resource to the periodic traffic in interest. For example, the end-side frequency resource, and the earlier time resource among a plurality of free resources may be preferentially allocated to the periodic traffic in interest. Then, the resource allocator 206 confirms as to whether or not there is a possibility that the resource tentatively allocated conflicts during a "predetermined time" with resources that have already been allocated to other periodic traffics. The "predetermined time" represents a time corresponding to the least common multiple of (i) the respective periods of the one or more periodic traffics to which the frequency resource tentatively allocated to the periodic traffic in interest has already been allocated and (ii) a period of the periodic traffic in interest. If no conflict occurs over the predetermined time, the resource allocator 206 can decide the resource allocation to the periodic traffic in interest. On the other hand, if any conflict occurs, the resource allocator 206 moves the resource tentatively allocated in a time direction or in a frequency direction. The resource allocator 206 may increment an offsat of the time resource tentatively allocated by, for example, one, or may bring the frequency resource tentatively allocated closer to a center side by, for example, one. The resource allocator 206 repeats the tentative allocation of the resource and the conflict check over the predetermined time, to thereby finally allocate some resource to the periodic traffic in interest.

In short, the resource allocator 206 allocates to the second and subsequent periodic traffics (a) an arbitrary time resource of a frequency resource that has not been allocated to any periodic traffic (for example, the earliest time resource of a frequency resource which is arranged adjacent to a frequency resource which has already been allocated to one or more periodic traffics) or (b) a time resource that can avoid conflict with one or more periodic traffic among frequency resources that have already been allocated to the one or more periodic traffics.

According to the resource allocation, of the item (a), delay times given to periodic traffics to which the allocation is performed can be minimized. Therefore, when the delay time permitted in the periodic traffics is short, the resource allocation of the item (a) is preferable. On the other hand, according to the preferable resource allocation process in this embodiment, frequency resources which have not been allocated to any periodic traffic are arranged on a center frequency side as compared with frequency resources that have already been allocated to any of the period traffics. That is, according to the resource allocation of the item (a), the effect of increasing the total utilizations of the end-side frequency resources is low.

According to the resource allocation of the above item (b), the total utilizations of the frequency resources that have already been allocated to any of periodic traffics are increased. According to the preferable resource allocation process in this embodiment, the frequency resources which have already been allocated to any of periodic traffics are arranged on the end side as compared with frequency resources which have not been allocated to any periodic traffic. That is, according to the resource allocation of the item (b), the effect of increasing the total utilizations of the end-side frequency resources are high. On the other hand, according to the resource allocation of the item (b), since a common frequency resource can be allocated to a plurality of periodic traffics by providing the time offsets different from each other, the delay time given to the periodic traffic tends to increase. Hence, when the resource allocation of the item (b) is conducted, there is a need to consider the delay time permitted in the periodic traffics for which the allocation is to be performed.

In some time resource, a plurality of frequency resources may be allocated to some periodic traffic. That is, the number of frequency resources is not limited to one. The number of frequency resources may be determined in advance, or may be determined taking adaptive modulation based on a propagation channel status of the frequency resource allocated to the periodic traffic into consideration.

In a process of step S302, the end-side frequency resources are preferentially allocated to the periodic traffics which are high in resource utilization. Hence, since the total utilization of the frequency resource tends to be substantially monotonically decreased from the end toward the center, there is a high possibility that the total utilization of the extreme frequency resource becomes higher than that of the central frequency resource. Therefore, the resource allocation process according to this embodiment enables an efficient usage of the frequency resources even if the resource allocation process ends at step S302.

However, depending on the results of the resource allocation to the second and subsequent periodic traffics, the total utilization of the frequency resource is not always monotonically decreased from the end toward the center. That is, there is a risk that a reverse phenomenon occurs in which the total utilization of one frequency resource falls below the total utilization of another frequency resource arranged on the central frequency side with respect to the one frequency resource. Therefore, in order to further increase the use efficiency of the frequency resources with the elimination of the above reverse phenomenon, the resource allocator 206 may execute step S303 if necessary.

In step S303, the resource allocator 206 rearranges the frequency resources in descending order of total utilization. Then, the resource allocator 206 rearranges the frequency resources, which are rearranged in descending order of total utilization, in order from the end. In this example, the total utilization can be calculated through, for example, the following Expression (3).

$$G_i = \sum_{k \in S_i} M_k \qquad (3)$$

In Expression (3), i denotes an index for identifying a frequency resource, Gi denotes a total utilization of the frequency resource i, and Si denotes a set of indexes for identifying periodic traffics to which the frequency resource i is allocated.

In this example, if there is a need that the number of frequency resources of one periodic traffic is two or more and that continuous frequency resources are allocated to the one periodic traffic (for example, single carrier transmission is performed for the one periodic traffic), the continuous frequency resources are not separated in step S303. Specifically, in step S303, the continuous frequency resources are regarded as a group of frequency resources and treated equally with the other individual frequency resources. The total utilization of the group of the frequency resources can be evaluated by a mean value (or, a maximum value, a minimum value, a median value, a mode value, etc.) of the respective total utilizations of the two or more frequency resources included in the group of frequency resources. The frequency resource rearrangement which is identical with or similar to that performed in step S303 may be locally conducted within the group of frequency resources.

As described above, the wireless communication device according to the first embodiment preferentially allocates the frequency resources on the end side to the periodic traffics which are high in resource utilization. Therefore, in the wireless communication device, the total utilization of the frequency resource is substantially monotonically decreased from the end toward the center. There is the high possibility that the total utilization of the extreme frequency resource becomes higher than that of the central frequency resource,

In short, the wireless communication device enables the resource allocation in which the frequency resources on the end side are densely used by the periodic traffics. Therefore, a large number of frequency resources continuous from the center frequency can be kept free. Hence, when non-periodic traffic that conducts single carrier transmission exists together, an upper limit of the number of frequency resources that can be allocated to the non-periodic traffic can be stably increased. Therefore, the degree of freedom of the resource allocation to the non-periodic traffic is improved, and the high throughput is achieved in the overall wireless communication system. That is, the frequency resources can be efficiently used.

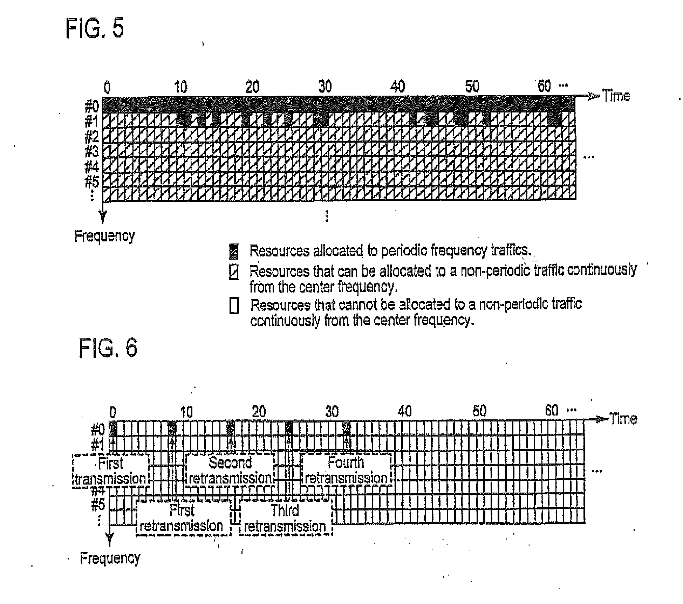

Hereinafter, the effects of the resource allocation process according to this embodiment are visually illustrated in Figs. 4 and 5. Specifically, the resource allocation process of a first comparative example and the resource allocation process according to this embodiment are each applied to 50 periodic traffics. Each of those 50 periodic traffics has a period selected at random from periods {10 ms, 20 ms, 32 ms, 40 ms, 64 ms, 80 ms, 128 ms, 160 ms, 320 ms, 640 ms} as defined in the 3GPP LTE. The resource allocation process of the first comparative example allocates the resources in ascending order of serial number of the periodic traffic. Fig. 4 shows resource allocation obtained by the resource allocation process of the first comparative example. Fig. 5 illustrates resource allocation obtained by the resource allocation process according to this embodiment. For simplification, the number of frequency resources that can be allocated to each periodic traffic in a given time resource is fixed to 1.

As compared with the resource allocation in Fig. 5, in the resource allocation of Fig. 4, free frequency resources are noticeable on the end side, and the number of frequency resources that can be allocated to the non-periodic traffic continuously from the center frequency is small in a part of the time resources. On the other hand, in the resource allocation of Fig. 5, since the frequency resources on the end side are densely used by the periodic traffics, a large number of frequency resources can be allocated to the non-periodic traffic continuously from the center frequency. Therefore, it can be seen from a comparison between Figs. 4 and 5 that the frequency resources are efficiently used according to this embodiment.

For simplification, this embodiment is premised on that the same frequency resource is allocated in one subframe duration. However, one subframe duration may be divided into two blocks in the time direction (the time-frequency block is also referred to as a "resource block"), and a frequency hopping in which a frequency resource of the anterior-half time resource is different from that of the posterior-half time resource may be executed. In this case, for example, the resource allocation process according to this embodiment is applied to one of the anterior-half time resource and the posterior-half time resource, and a frequency resource is allocated to the remaining time source according to the algorithm of the frequency hopping.

For example, when the frequency hopping which is symmetric about the center frequency is executed, as a frequency resource allocated to a periodic traffic is closer to the end side, the periodic traffic can obtain the higher frequency diversity effect. As described above, in the preferable resource allocation process according to this embodiment, the possibility that a frequency resource on the end side is allocated to a periodic traffic, which is higher in resource utilization, is higher. Therefore, the retransmission frequency of the periodic traffic, which is high in resource utilization, is suppressed by the frequency diversity effect, Also, a buffer overflow in a transmission source of the periodic traffic can be avoided and power consumption can be reduced. Also, the periodic traffic, which is high in resource utilization, generally tends to be small in the maximum number of retransmissions and high in packet loss rate. However, a packet loss rate in this periodic traffic is also suppressed.

(Second Embodiment)

A wireless communication device according to a second embodiment is the same as or similar to that exemplified in Fig. 2, but is different in the resource allocation process. Specifically, the wireless communication device according to this embodiment conducts the resource allocation process taking a resource, which is allocated in advance to a retransmission process, into account. In this embodiment, it is assumed that the information relating to the above described scheduling request includes information relating to the retransmission process which will be described later.

As shown in Fig. 6, in an uplink of the 3GPP LTE of a frequency division duplex (FDD) system, the retransmission process is conducted at time intervals of 8 ms subsequent to a first transmission process. Since the retransmission process is conducted when all of the past transmission processes or retransmission processes fail, an occurrence probability of the retransmission process becomes lower as the number of retransmissions increases more. For example, since a first retransmission process has always occurred when a fourth retransmission process occurs, the probability of the fourth retransmission process is lower than that of the first retransmission process.

A so-called adaptive retransmission is not employed in the uplink of the 3GPP LTE of the FDD system. That is, resources for the retransmission process are allocated by a base station in advance. However, as described above, there may be a case where no retransmission process occurs. Therefore, when the retransmission process does not occur, the base station reallocates the resources if necessary in order to effectively uses free resources. In the wireless communication system employing no adaptive retransmission, the UE does not need to decode a control signal that is frequently transmitted from the base station for the adaptive retransmission and that notifies the resource allocation. Therefore, the power consumption can be suppressed. Hence, it is considered promising to apply this wireless communication system to communication between machines in future.

This embodiment is not limited to the uplink in the 3GPP LTE of the FDD system, but are applicable to other wireless communication systems which employs no adaptive retransmission and whose retransmission timing has been known.

The resource allocator 206 recognizes as to whether or not it is necessary to retransmit each periodic traffic, based on the information relating to the retransmission process. If no retransmission process occurs, the resource allocator 206 can allocate the resources that have been allocated in advance for the retransmission process to the non-periodic traffics if necessary.

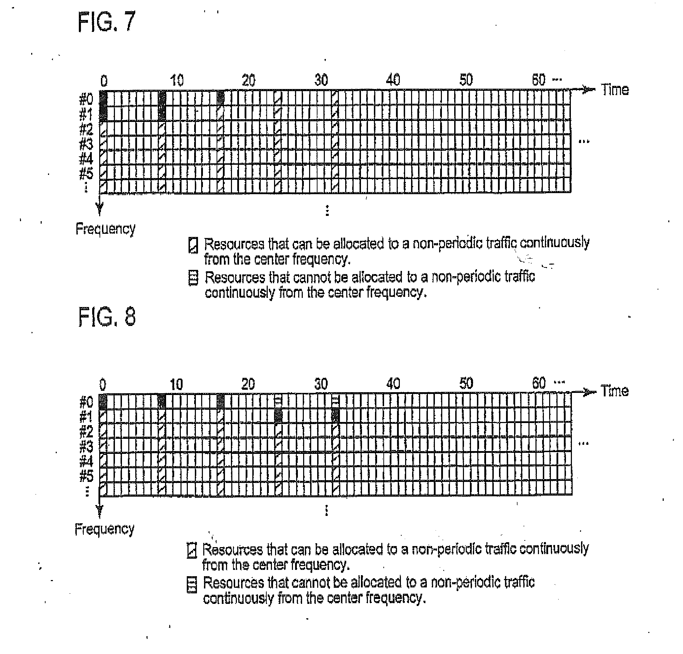

In the resource allocation process according to this embodiment, as exemplified in Fig. 7, the resource allocator 206 allocates an identical time resource for a process (first transmission process) of first time transmitting a plurality of periodic traffics to which frequency resources different from each other are allocated. It is preferable that the maximum numbers of retransmissions of the respective periodic traffics are equal to each other and that the retransmission timings of the plural periodic traffics are identical with each other. However, the maximum numbers of retransmissions may be different from each other, and the retransmission timings may be different from each other.

Hereinafter, let consider a case where a frequency resource #0 and a frequency resource #1 are respectively allocated to two periodic traffics each having the maximum number of transmissions = 4. It is assumed that a first periodic traffic to which the frequency resource #0 is allocated is successfully transmitted in a second retransmission process and that a second periodic traffic to which the frequency resource #1 is allocated is successfully transmitted in the first retransmission process.

Fig. 7 shows resource allocation obtained by the resource allocation process according to this embodiment. Fig. 8 shows resource allocation obtained by a resource allocation process of a second comparative example. In the example of Fig. 7, the first transmission process of the first periodic traffic and the second periodic traffic is aligned with an identical time resource 0. On the other hand, in the example of Fig. 8, the first transmission process of the first periodic traffic and the second periodic traffic is not aligned with an identical time resource.

In the example of Fig. 7, both of resources allocated for third and fourth retransmission process of the first periodic traffic and the second periodic traffic are free. Therefore, the number of resources that can be allocated to the non-periodic traffics continuously from the center frequency can be increased. On the other hand, in the example of Fig. 8, resources allocated for third and fourth retransmission process of the first periodic traffic are free. However, those time positions are identical with the resources allocated for the first transmission process of the second periodic traffic and the first retransmission process of the second periodic traffic. Therefore, the number of resources that can be allocated to the non-periodic traffics continuously from the center frequency cannot be increased.

Also, when the identical frequency resource is allocated to the plurality of periodic traffics having the same period, allocatable time resources may be restricted taking into account a delay from a time when a new periodic traffic occurs to a time when a resource is allocated to the new periodic traffic.

For example, when the adaptive retransmission is not conducted, four periodic traffic having a period = 20 ms and a retransmission interval = 8 ms can be time-multiplexed with the same frequency resource at the maximum. Since the resource allocation to those four periodic traffics is repealed in units of 20 ms which a total from. t0 to (t0+19) in reference to the time t0, it is sufficient to consider this one unit.

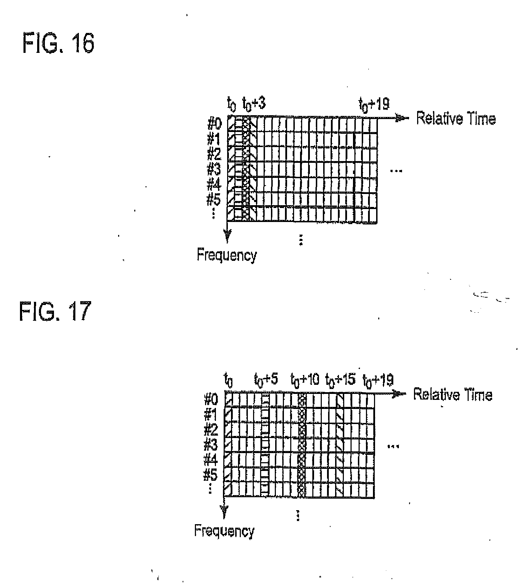

There may be case where the time resources allocated to those four periodic traffics are concentrated on relative times t0 to (t0+3), for example, as shown in Fig. 16. According to this resource allocation, all of the relative times t0 to (t0+19) are ensured for the transmission process or retransmission process of the above four periodic traffics. Therefore, even if a periodic traffic newly occurs, for example, at a relative time (t0+4), a resource is not allocated to the new periodic traffic over 16 ms in total until the next relative time t0. 16 ms in total is a delay from a time when the new periodic traffic occurs to a time where a resource is allocated to the new periodic traffic.

In view of the above, in particular, under the environment where the number of periodic traffics in the same period is large, it is preferable that the time resources that can be allocated to those periodic traffics are distributed as shown in Fig. 17. Specifically, when the four periodic traffics having 20 ms in transmission period and 8 ms in retransmission interval are time-multiplexed with the same frequency resource, it is preferable that relative times t0, (t0 + 5), (t0 + 10), and (t0 + 15) are allocated to those respective periodic traffics. According to this resource allocation, there is a possibility that a resource is allocated to a new periodic traffic after 4 ms at maximum regardless of a time when the new periodic traffic occurs. The allocatable time resource is thus restricted in response to demands, which results in that an appropriate resource allocation can be conducted on the respective traffics while a delay time from a time when a new periodic traffic occurs to a time when a resource is allocated to the new periodic traffic is reduced on average. The resource allocation can be designed so that the above delay time is reduced on average in the same manner as this example even in the case where periodic traffics are different in period and/or retransmission interval from those of this example.

As described above, in the wireless communication device according to the second embodiment, the identical time resource is allocated for a process (first transmission process) of transmitting first time a plurality of periodic traffics to which frequency resources different from each other are allocated. Therefore, according to this wireless communication device, there is the high possibility that time resources occur in which the retransmission process of those plural periodic traffics collectively become unnecessary.

In short, according to this wireless communication device, such a possibility is high that the resources allocated in advance for the retransmission process of those plural periodic traffics are collectively free. In this case, a large number of frequency resources can be allocated thereto continuously from the center frequency. Therefore, when a non-periodic traffic that conducts the single carrier transmission exists together, an upper limit of the number of frequency resources that can be allocated to the non-periodic traffic can be stably increased. Therefore, the degree of freedom of the resource allocation to the non-periodic traffic is improved, and the high throughput is achieved in the overall wireless communication system. That is, the frequency resources can be efficiently used.

Also, in the wireless communication device according to this embodiment, when the plurality of periodic traffics which are equal in period and retransmission interval are time-multiplexed with the identical frequency resource, the allocatable time resource is restricted in response to demands, Specifically, a time offset of the plurality of periodic traffics is designed so that when a new periodic traffic occurs, a delay time until a resource is allocated to the new periodic traffic is reduced on average. Therefore, this wireless communication device is suitable for an environment in which there is a possibility that the periodic traffic whose allowable delay time is short occurs.

(Third Embodiment)

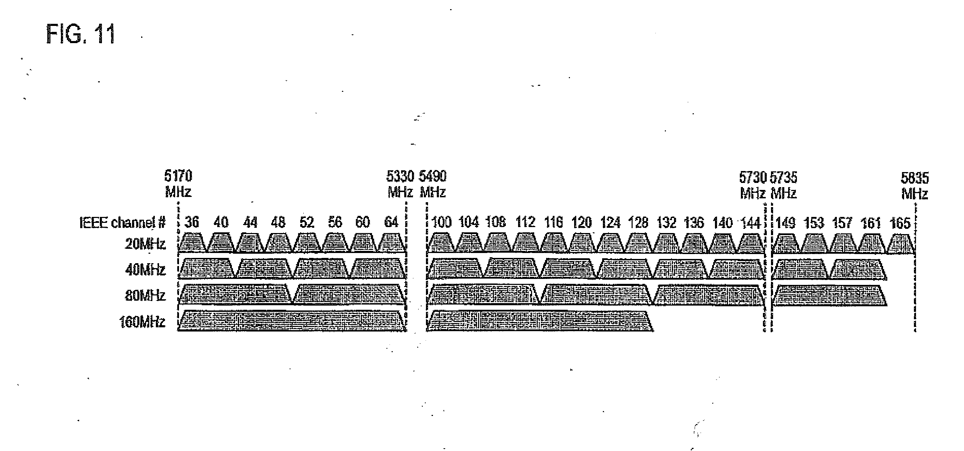

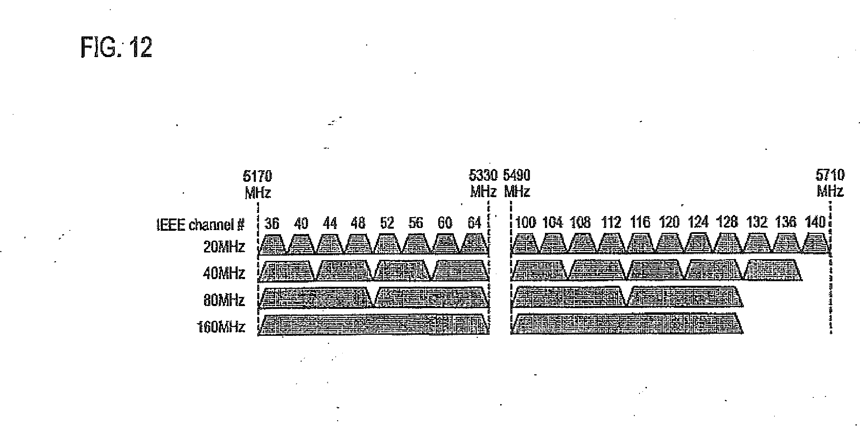

In a third embodiment, a wireless communication system may be, for example a wireless LAN (local area network), but is not limited thereto. In the following description, an example in which the third embodiment is applied to IEEE802.11ac will be described. Fig. 11 shows a channel arrangement of IEEE802,11ac in the United States. Fig. 12 shows a channel arrangement of IEEE802.11ac in Japan and Europe.

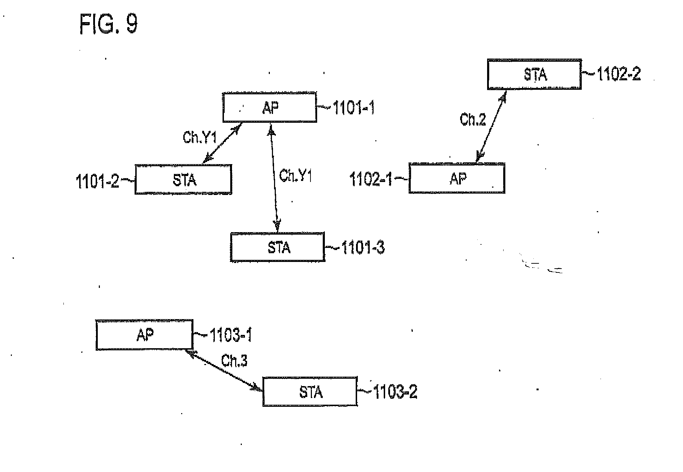

Fig. 9 shows a case where three APs exist together in the same area. As AP 1101-1 communicates with an STA 1101-2 and an STA 1101-3 through a channel Y1. An AP 1102-1 communicates with an STA 1102-2 through a channel 2 which is different from the channel Y1. An AP 1103-1 communicates with an STA 1103-2 through a channel 3 which is different from both of the channel Y1 and the channel 2,

According to the wireless LAN, each AP determines a channel to be used in an autonomous decentralized fashion, taking an interference quantity and a desired bandwidth into account For example, in order for another AP (not shown) to newly operate in the same area as that of the AP 1101-1, the AP 1102-1, and the AP 1103-1, said another AP needs to select a channel other than the channels Y1, Y2, and Y3, That is, the degree of freedom of the channel selection of said another AP, which newly operates, is restricted by the channel selections conducted by the APs, which have operated in the same area.

In the wireless communication device (for example, corresponding to an AP, but not limited to AP) according to this embodiment, the channel to be used is efficiently selected. As a result, the degree of freedom of the channel selection by a wireless communication device that operates in the same area in future can be enhanced.

As shown in Fig, 10, the wireless communication device according to this embodiment includes an antenna 1201, an RF module 1202, a baseband module 1203, a reception signal processor 1204, a reception signal analyzer 1205, a channel selector 1206, a transmission signal generator 1207, and a transmission signal processor 1208.

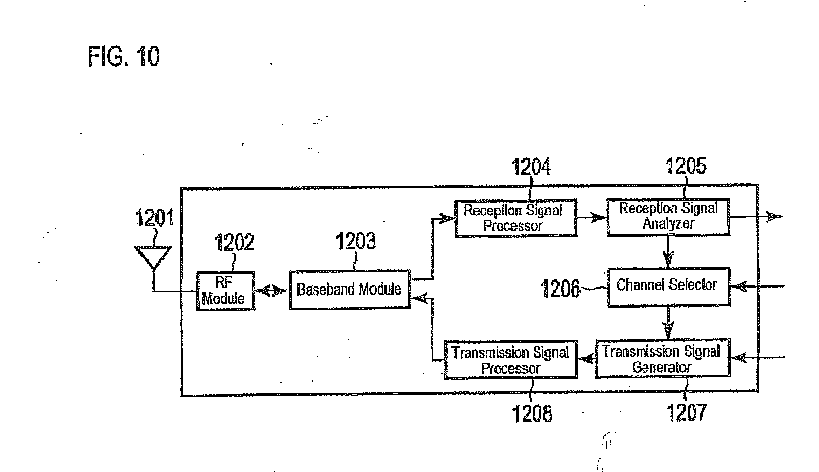

The antenna 1201, the RF module 1202, the baseband module 1203, the reception signal analyzer 1205, and the transmission signal generator 1207 in Fig. 10 are the same as or similar to the antenna 201, the RF module 202, the baseband module 203, the reception signal analyzer 205, and the transmission signal generator 207 in Fig. 2, respectively.

The reception signal processor 1204 receives a decided value from the baseband module 1203, and performs for the decided values, for example, DFT, channel equalization, demodulation, deinterlcaving, and decoding to obtain a reception signal. The reception signal processor 1204 outputs the reception signal to the reception signal analyzer 1205.

The transmission signal processor 1208 receives a transmit signal from the transmission signal generator 1207. The transmission signal processor 1208 performs for the transmit signal, for example, encoding, interleaving, modulation, layer mapping, preceding, and IFFT operation.

The channel selector 1206 executes a channel selection process which will be described later, and selects a channel used for wireless communication. The channel selector 1206 is notified, from the reception signal analyzer 1205 or a signal processor (not shown) in a higher layer, of information of channel arrangement, information of a desired bandwidth, and information of carrier sense levels of the respective channels. The channel selector 1206 executes the channel selection process based on those information.

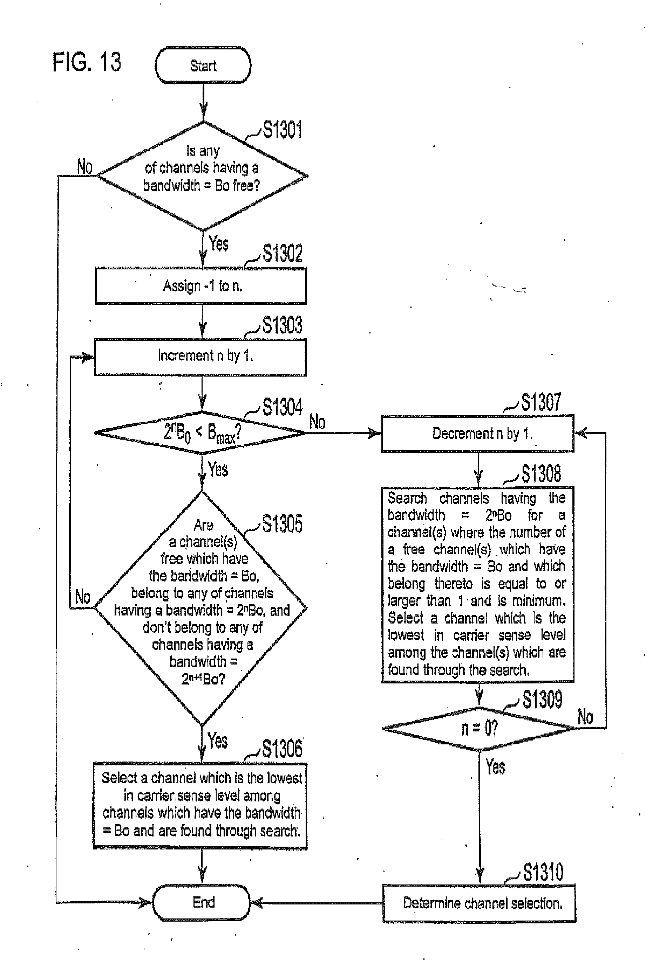

The channel selector 1206 may execute the chaimel selection process shown in Fig. 13. In an example of Fig, 13, it is assumed that a desired bandwidth is Bo [MHz] and that a selectable maximum bandwidth is Bmax [MHz]. In an example of IEEE802.11ac, Bo = {20, 40, 80} and Bmax = 160. Also, in Fig. 13, it is further assumed that it is determined as to whether or not a channel is free, based on whether or not a carrier sense level of the channel is lower than a threshold value.

At first, the channel selector 1206 determines as to whether or not any of the channels having the bandwidth = Bo is free. If all of the channels having the bandwidth = Bo are in use, it means that no selectable channel remains. Therefore, the channel selection process in Fig. 13 ends. On the other hand, if there is one or more free channels having the bandwidth = Bo, the process proceeds to step S1302. Although not shown, if there is one free channel having the bandwidth = Bo, the channel selector 1206 may immediately selects the one free channel to thereby end the channel selection process in Fig. 13.

In step S1302, the channel selector 1206 assigns -1 to n, and the process proceeds to step S1303. The symbol n denotes a variable for designating a bandwidth in interest in the channel selection process of Fig. 13.

In Step S1303, the channel selector 1206 increments n by 1. Then, the channel selector 1206 determines as to whether or not $2^n$Bo is lower than Bmax (step S1304). If $2^n$Bo is lower than Bmax, the process proceeds to step S1305. If $2^n$Bo is not lower than Bmax, the process proceeds to Step S1307.

In step S1305, the channel selector 1206 focuses on a channel(s) which have a bandwidth = $2^n$Bo but do not belong to any channels having a bandwidth = $2^{n+1}$Bo, Such a channel(s) may be referred to as a "channel(s)" in interest. According to the channel arrangement in Fig. 12, if n = 0, the channel in interest is a channel #140; if n =1, the channels in interest are channels #132 to #136.

The channel(s) in interest are not a target(s) of channel bonding for using the channel(s) having the bandwidth = $2^{n+1}$Bo. Therefore, if the channel selector 1206 selects a channel from the channels in interest, a possibility that another wireless communication device that operates in the same area in future can select a channel having the bandwidth = $2^{n+1}$Bo becomes high.

If there is no channel in interest, the process returns to step S1303, If there is one or more channels in interest, the channel selector 1206 searches a free channel(s) which have the bandwidth = Bo and which belong to any of the one or more channels in interest. If one or more free channels are obtained by the search, the process proceeds to step S1306, If not, the process returns to step S1303.

In step S1306, the channel selector 1206 selects a channel which is the lowest in carrier sense level among the one or more free channels which have the bandwidth = Bo and which are obtained in step S1305, and then the channel selection process in Fig. 13 ends.

In summary, the channel selector 1206 preferentially selects, through the loop process including step S1305, (1) the free channel(s) which have the desired bandwidth and which are not a target of the channel bonding or (ii) the free channel(s) which have the desired bandwidth, which belong to a channel(s) having a bandwidth larger than the desired bandwidth not targeted, which are not a target of the channel bonding.

In step S1307, the channel selector 1206 decrements n by 1. Then, the channel selector 1206 searches the channels having the bandwidth = $2^n Bo$ for a channel(s) where the number of a free channel(s) which have the bandwidth = Bo and which belong thereto is equal to or larger than 1 and is minimum. The channel selector 1206 tentatively selects a channel which is the lowest in carrier sense level among the obtained channels (step S1308). If the process in step S1308 has been executed once or more in the past, the channel selector 1206 may search the channels, which are tentatively selected in previous step S1308, or may search all of the channels. Then, the channel selector 1206 determines as to whether n is equal to 0 (step S1309). If n is equal to 0, the process proceeds to Step S1310; if not, the process returns to Step S1307.

In Step S1310, the channel selector 1206 determines the channel selection in the latest step S1308, and the channel selection process in Fig. 13 ends.

In summary, the channel selector 1206 preferentially selects, through the loop process including step S1308, the channel which has the desired bandwidth and which is unlikely to be the target of the channel bonding. Specifically, while narrowing a bandwidth in interest from the selectable maximum bandwidth in order, the channel selector 1206 repetitively selects, within channels having the bandwidth in interest, a channel(s) where the number of free channels having the desired bandwidth is equal to or larger than 1 and is minimum. The channel selector 1206 selects the finally obtained channel having the desired bandwidth.

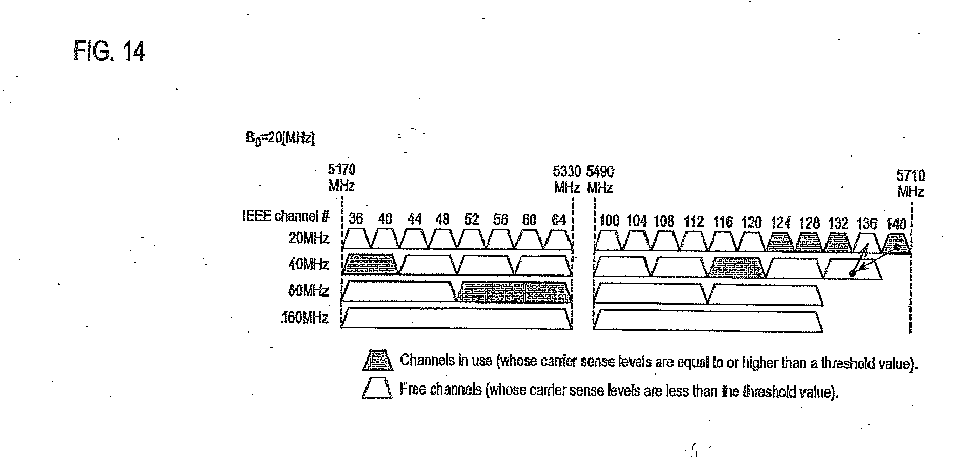

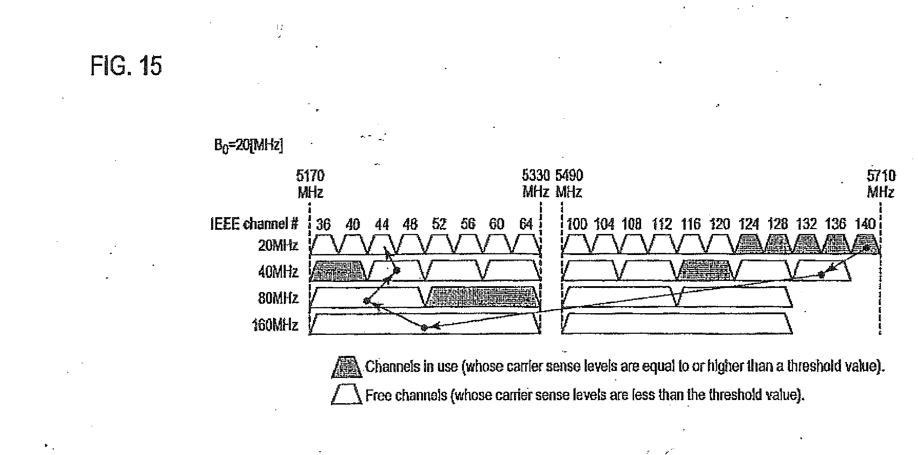

Hereinafter, description will be given on an example in which the channel selection process in Fig. 13 is applied to the channel arrangement of Fig. 12, with reference to Figs. 14 and 15.

In an example of Fig. 14, channels #36 to #40, #52 to #64, #116 to #120, #124, #128, #132, and #140 are in use.

In step S1305 at a first time, the channel selector 1206 focuses on the channel #140 being equivalent to a channel which has the bandwidth = 20 MHz and which does not belong to any of channels having the bandwidth = 40 MHz, However, the channel #140 is in use.

In step S1305 at a second time, the channel selector 1206 focuses on the channel #132 to #136 being equivalent to a channel(s) which have the bandwidth = 40 MHz and which do not belong to any of channels having the bandwidth = 80 MHz. Furthermore, the channel selector 1206 searches for a free channel(s), which have the bandwidth = 20 MHz and which belong to any of the channel #132 to #136, and obtains the channel #136. Then, in step S1306, the channel selector 1206 selects the channel #136.

In an example of Fig. 15, the channels #36 to #40, #52 to #64, #116 to #120, #124, #128, #132, and #140 are in use.

In step S1305 at a first time, the channel selector 1206 focuses on the channel #140, being equivalent to a channel(s), which have the bandwidth = 20 MHz and which do not belong to any of channels having bandwidth = 40 MHz. However, the channel #140 is in use.

In step S1305 at a second time, the channel selector 1206 focuses on the channel #132 to #136 being equivalent to a channel(s) which have the bandwidth = 40 MHz and which do not belong to any of channels having the bandwidth = 80 MHz. However, all of the channels #132 and #136 are in use.

Since there is no channel, which has the bandwidth = 80 MHz and does not belong to any of channels having the bandwidth = 160 MHz, no channel is selected even in step S1305 at a third time.

Subsequently, in step S1308 at a first time, the channel selector 1206 searches the channels having the bandwidth = 80 MHz for a channel(s) where the number of free channels which have the bandwidth = 20 MHz and which belong to any of the channels having the bandwidth = 80 MHz is equal to or larger than 1 and is minimum, and obtains the channel #36 to #48. Since the number of channels obtained by the search is one, the channel selector 1206 tentatively selects the channel #36 to #48.

In step S1308 at a second time, the channel selector 1206 searches the channels, which have the bandwidth = 40 MHz and which are in the channel #36 to #48 tentatively selected, for a channel(s) where the number of free channels which have the bandwidth = 20 MHz and which belong to the channel #36 to #48 is equal to or larger than 1 and is minimum and obtains the channel #44 to #48. Since the number of channels obtained by the search is one, the channel selector 1206 tentatively selects the channel #44 to #48.

In step S1308 at a third time, The channel selector 1206 searches the channels, which have bandwidth = 20 MHz and which are in the channel #44 to #48 tentatively selected, for a channel(s) where the number of free channels which have the bandwidth = 20 MHz and which belong to the channel #44 to #48 is equal to or larger than 1 and is minimum (that is, searches for free channels having the bandwidth = 20 MHz) and obtains the channels #44 and #48. The channel selector 1206 tentatively selects a channel (assuming that channel #44 in this example) which is the lowest in carrier sense level among the charmels #44 and #48 which are obtained by the search. Then, in step S1310, the channel selector 1206 determines the selection of the channel #44.

As has been described above, in the wireless communication device according to the third embodiment, if (i) a channel which has a desired bandwidth and which is not a target of the channel bonding or (ii) a channel which has the desired bandwidth and which belongs to a channel having a larger bandwidth than the desired bandwidth and not being the target of the channel bonding is free, these free channels are preferentially selected. Furthermore, in the wireless communication device, if such a channel cannot be selected, a channel which has the desired bandwidth and which is unlikely to be the target of the channel bonding is preferentially selected. Specifically, while narrowing a bandwidth in interest from the selectable maximum bandwidth in order, the wireless communication device repetitively selects, within channels having the bandwidth in interest, a channel(s) where the number of free channels which have the desired bandwidth is equal to or larger than 1 and is minimum, and selects a finally obtained channel(s) having the desired bandwidth. Therefore, according to the wireless communication device, the possibility that another wireless communication device that operates in the same area in future can use the channel bonding can be increased. That is, the channels within the area can be efficiently used.

The processes in the above respective embodiments may be realized by using a general-purpose computar as a basic hardware. A program that realizes the processes in the above respective embodiments may be stored in a storage medium readable by the computer, and be provided. The program is stored in the computer readable storage medium as a file in an installable format or a file in an executable format. The computer readable storage medium includes a magnetic disc, an optical disc (CD-ROM, CD-R, DVD, etc.), a magnetooptical disc (MO, etc.) and a semiconductor memory. The computer readable storage medium may be any medium so long as it can store the program and can be read by the computer. Also, the program that realizes the processes in the above respective embodiments may be stored in a computer (server) connected to a network such as the Internet, and downloaded to the computer (client) over the network.

Several embodiments have been described as examples. However, it is not intended that the scope of the invention is limited thereto. These novel embodiments can be implemented in various forms, and various omission, replacement, and changes can be made in the scope not departing from the gist of the invention. The embodiments and the modifications thereof are included in the scope and the gist of the invention, and also included in the claims and their equivalents.

The following feature combinations are also possible:

(1) A wireless communication device comprising:

a wireless communication module performs wireless communication; and
a selector selects channels having a desired bandwidth for use in the wireless communication, wherein
when there is a first free channel which has the desired bandwidth and which does not belong to a channel having a first bandwidth, the selector selects the first free channel,
when thers is no first free channel and there is a second free channel which has the desired bandwidth, which belongs to a channel having a third bandwidth, and which does not belonging to a channel having a second bandwidth, the selector selects the second free channel,
the first bandwidth is larger than the desired bandwidth,
the second bandwidth is larger than the first bandwidth, and
the third bandwidth is smaller than the second bandwidth and larger than the desired bandwidth.

(2) The device of (1), wherein when there is neither the first free channel nor the second free channel, the selector is configured, while narrowing a bandwidth in interest from a selectable maximum bandwidth in order, to repetitively select, within a channel having the bandwidth in interest, a channel where a number of free channels having the desired bandwidth is equal to or larger than 1 and is minimum, and to select a finally obtained third free channels having the desired bandwidth.

(3) A wireless communication method comprising:

selecting channels having a desired bandwidth for use in wireless communication,
wherein
when there is a first free channel which has the desired bandwidth and which does not belong to a channel having a first bandwidth, the selecting selects the first free channel,
when there is no first free channel and there is a second free channel which has the desired bandwidth, which belongs to a channel having a third bandwidth, and which does not belonging to a channel having a second bandwidth, the selecting selects the second free channel,
the first bandwidth is larger than the desired bandwidth,

the second bandwidth is larger than the first bandwidth, and
the third bandwidth is smaller than the second bandwidth and larger than the desired bandwidth.

(4) The method of (3), wherein when there is neither the first free channel nor the second free channel, the selecting, while narrowing a bandwidth in interest from a selectable maximum bandwidth in order, repetitively selects, within a channel having the bandwidth in interest, a channel where a number of free channels having the desired bandwidth is equal to or larger than 1 and is minimum, and to select a finally obtained third free channels having the desired bandwidth.

**Claims**

1.  A wireless communication device comprising:

    a wireless communication module that wirelessly communicates with a plurality of other wireless communication devices; and
    an allocator that allocates time resources and frequency resources to a plurality of traffics which periodically occur between the wireless communication device and the plurality of other wireless communication devices in descending order of resource utilizations, wherein
    the resource utilization of a given traffic corresponds to a time rate at which the given traffic uses a frequency resource allocated thereto, and
    the allocator allocates the frequency resource, which is arranged at a position closer to an end than a center frequency, to a traffic which is the highest in resource utilization.

2.  The device of claim 1, wherein the resource utilization of the given traffic is calculated based on a period of the given traffic.

3.  The device of claim 2, wherein the resource utilization of the given traffic is calculated further based on a rate of errors occurring in the given traffic.

4.  The device of any one of claims 1 to 3, wherein
    the allocator allocates the time resources and the frequency resources to the plurality of traffics and further rearranges the allocated frequency resources from the end in descending order of total utilizations, and
    a total utilization of a given frequency resource is calculated based on the resource utilization of one or more traffics to which the given frequency resource is allocated.

5.  The device of any one of claims 1 to 4, wherein
    when the allocator is to allocate in advance the time resources for a process of retransmitting the plurality of traffics to which frequency resources different from each other are allocated, the allocator allocates an identical time resource for a process of transmitting first time the plurality of traffics to which the frequency resources different from each other are allocated.

6.  The device of any one of claims 1 to 4, wherein
    the plurality of traffics include a first group of traffics to which frequency resources different from each other are allocated and a second group of traffics to which the frequency resources different from each other are allocated,
    when the allocator is to allocate the time resources for a process of retransmitting the first and second groups of traffics, the allocator allocates a first time resource for a process of
    transmitting first time the first group of traffics and allocates a second time resource for a process of transmitting first time the second group of traffics, and
    there is at least one time resource between the first and second time resources.

7.  The device of any one of claims 1 to 4, wherein
    the plurality of traffics include plural groups of traffics, frequency resources different from each other being allocated to the traffics of each group,
    when the allocator is to allocate the time resources for a process of retransmitting each group of traffics, the allocator allocates an identical time resource for a process of transmitting first time each group of traffics, and
    the allocated time resources for the process of transmitting first time the plural groups traffics are distributed in time.

**8.** A wireless communication method comprising:

allocating time resources and frequency resources to a plurality of traffics which periodically occur between a first wireless communication device and a plurality of second wireless communication devices in descending order of resource utilizations, wherein
the resource utilization of a given traffic corresponds to a time rate at which the given traffic uses a frequency resource allocated thereto, and
the frequency resource, which is arranged at a position closer to an end than a center frequency, is allocated to a traffic which is the highest in resource utilization.

**9.** The method of claim 8, further comprising:

calculating the resource utilization of the given traffic based on a period of the given traffic.

**10.** The method of claim 9, wherein the calculating calculates the resource utilization of the given traffic further based on a rate of errors occurring in the given traffic.

**11.** The method of any one of claims 8 to 10, wherein
the allocating comprises
allocating the time resources and the frequency resources to the plurality of traffics, and
rearranging the allocated frequency resources from the end in descending
order of total utilizations, and
the method further comprising:

calculating a total utilization of a given frequency resource based on the resource utilization of one or more traffics to which the given frequency resource is allocated.

**12.** The method of any one of claims 8 to 11, wherein
when the time resources are to be allocated for a process of retransmitting the plurality of traffics to which frequency resources different from each other are allocated, an identical time resource is allocated for a process of transmitting first time the plurality of traffics to which the frequency resources different from each other are allocated.

**13.** The method of any one of claims 8 to 11, wherein
the plurality of traffics include a first group of traffics to which frequency resources different from each other are allocated and a second group of traffics to which the frequency resources different from each other are allocated,
when the time resources are to be allocated for a process of retransmitting the first and second groups of traffics,
a first time resource is allocated for a process of transmitting first time the first group of traffics and a second time resource is allocated for a process of transmitting first time the second group of traffics, and
there is at least one time resource between the first and second time resources.

**14.** The method of any one of claims 8 to 11, wherein
the plurality of traffics include plural groups of traffics, frequency resources different from each other being allocated to the traffics of each group,
when the time resources are to be allocated for a process of retransmitting each group of traffics, an identical time resource is allocated for a process of transmitting first time each group of traffics, and
the allocated time resources for the process of transmitting first time the plural groups traffics are distributed in time.

FIG. 1

FIG. 2

## FIG. 3

```
            ( Start )
               │
               ▼
┌──────────────────────────────┐
│  Rearrange Periodic Traffics │──S301
└──────────────────────────────┘
               │
               ▼
┌──────────────────────────────┐
│      Allocate Resources      │──S302
└──────────────────────────────┘
               │
               ▼
┌──────────────────────────────┐
│ Rearrange Frequency Resources│──S303
└──────────────────────────────┘
               │
               ▼
            ( End )
```

## FIG. 4

■ Resources allocated to periodic frequency traffics.

▨ Resources that can be allocated to a non-periodic traffic continuously from the center frequency.

☐ Resources that cannot be allocated to a non-periodic traffic continuously from the center frequency.

FIG. 5

0    10    20    30    40    50    60 ···  →Time

#0
#1
#2
#3
#4
#5
:

↓
Frequency

■ Resources allocated to periodic frequency traffics.

▨ Resources that can be allocated to a non-periodic traffic continuously from the center frequency.

☐ Resources that cannot be allocated to a non-periodic traffic continuously from the center frequency.

FIG. 6

0    10    20    30    40    50    60 ···  →Time

#0
#1

First transmission    Second retransmission    Fourth retransmission

#4
#5
:

First retransmission    Third retransmission

↓
Frequency

FIG. 7

Resources that can be allocated to a non-periodic traffic continuously from the center frequency.

Resources that cannot be allocated to a non-periodic traffic continuously from the center frequency.

FIG. 8

Resources that can be allocated to a non-periodic traffic continuously from the center frequency.

Resources that cannot be allocated to a non-periodic traffic continuously from the center frequency.

FIG. 9

FIG. 10

FIG. 11

FIG. 12

FIG. 13

Start

S1301

Is any
of channels having a
bandwidth = Bo free?

No

Yes

S1302

Assign -1 to n.

S1303

Increment n by 1.

S1304

$2^n B_0 < B_{max}$?

No

Yes

S1305

Are
a channel(s)
free which have
the bandwidth = Bo,
belong to any of channels
having a bandwidth = $2^n$Bo, and
don't belong to any of
channels having a
bandwidth =
$2^{n+1}$Bo?

No

Yes

S1306

Select a channel which is the lowest
in carrier sense level among
channels which have the bandwidth
= Bo and are found through search.

S1307

Decrement n by 1.

S1308

Search channels having the
bandwidth = $2^n$Bo for a
channel(s) where the number of
a free channel(s) which have
the bandwidth = Bo and which
belong thereto is equal to or
larger than 1 and is minimum.
Select a channel which is the
lowest in carrier sense level
among the channel(s) which are
found through the search.

S1309

n = 0?

No

Yes

S1310

Determine channel selection.

End

24

## FIG. 14

$B_0=20[MHz]$

| | 5170 MHz | | | | | | | 5330 MHz | 5490 MHz | | | | | | | | | | 5710 MHz |

IEEE channel #  36  40  44  48  52  56  60  64   100 104 108 112 116 120 124 128 132 136 140
20MHz
40MHz
80MHz
160MHz

Channels in use (whose carrier sense levels are equal to or higher than a threshold value).

Free channels (whose carrier sense levels are less than the threshold value).

## FIG. 15

$B_0=20[MHz]$

Channels in use (whose carrier sense levels are equal to or higher than a threshold value).

Free channels (whose carrier sense levels are less than the threshold value).

FIG. 16

FIG. 17